# EUROPÄISCHE PATENTSCHRIFT

(11) **EP 0 941 382 B1**
(45) Veröffentlichungstag und Bekanntmachung des Hinweises auf die Patenterteilung: **15.10.2003**
(21) Anmeldenummer: 98946434.2
(22) Anmeldetag: 26.08.1998
(51) Int. Cl.: D21G 1/02

(54) **DURCHBIEGEEINSTELLWALZE, KALANDER UND VERFAHREN ZUM KALANDRIEREN**
CURL ADJUSTMENT CYLINDER, CALENDER AND METHOD FOR CALENDERING
CYLINDRE DE REGLAGE DE CINTRAGE, CALANDRE ET PROCEDE DE CALANDRAGE

(30) Priorität: 30.08.1997 DE 19738025
(43) Veröffentlichungstag der Anmeldung: 15.09.1999
(73) Patentinhaber: Eduard Küsters Maschinenfabrik GmbH & Co. KG, 47805 Krefeld (DE)
(72) Erfinder: BRENDEL, Bernhard, D-47929 Grefrath (DE); SVENKA, Peter, D-47929 Grefrath (DE)
(74) Vertreter: Sparing - Röhl - Henseler Patentanwälte
(86) Internationale Anmeldenummer: EP9805428
(87) Internationale Veröffentlichungsnummer: WO99011862

(56) Entgegenhaltungen:
- EP-A- 0 969 145
- DE-A- 3 004 913
- DE-A- 3 117 398
- DE-C- 3 918 989

## Beschreibung

Die Erfindung betrifft eine Durchbiegeeinstellwalze für einen Kalander zur Behandlung einer Warenbahn, insbesondere einer Papierbahn, nach dem Oberbegriff des Anspruchs 1. Die Erfindung betrifft ferner einen Kalander mit einer solchen Walze und ein Verfahren zum Kalandrieren einer Warenbahn unter Fixieren einer Betriebsposition einer unteren als eine solche Durchbiegeeinstellwalze ausgebildeten Endwalze eines Walzenstapels eines Kalanders.

Aus EP 0 969 145 A, die unter Artikel 54(3) EPÜ fällt, ist eine Durchbiegeeinstellwalze mit in einer Reihe angeordneten hydrostatischen Stützelementen bekannt, denen randseitig um 90° verdreht angeordnete, zusätzliche hydrostatische Stützelemente zugeordnet sind. Diese zusätzlichen hydrostatischen Stützelemente dienen der Abstützung des Walzenmantels gegenüberliegend zu den gleich angeordneten Stützelementen.

Aus DE 30 04 913 C2 ist bekannt, bei einem Kalander sowohl für die obere als auch die untere Endwalze eines Walzenstapels eine Biegeeinstellwalze zu verwenden, bei der der Walzenmantel von hydrostatischen Mantelstützelementen auf einer in seitlichen Lagern drehfest gehaltenen Walzenachse abgestützt und relativ zur Walzenachse vertikal beweglich ist, also mit einem inneren Walzenmantelhub versehen ist. Auch die Zwischenwalzen des Walzenstapels sind vertikal beweglich ausgeführt. Da während eines Betriebes die Vertikalposition des gesamten Walzenstapels in irgendeiner Weise vorgegeben werden muß, sind hierfür Anschläge vorgesehen. Dazu durchsetzt die Walzenachse jeder Biegeeinstellwalze ein vertikales Langloch in einer Lagerkulisse des Walzenmantels derart, daß der Walzenmantel relativ zu der Walzenachse im Bereich des Langlochs vertikal beweglich ist. Unter dem Einfluß der Mantel- bzw. Belastungseinrichtung bewegt sich der Walzenmantel der einen Endwalze in Vertikalrichtung solange, bis er sich an beiden Enden mit dem Anschlag des Langlochs gegen einen der Walzenachse zugeordneten Gegenanschlag legt und damit eine definierte, vorgegebene Lage (Betriebsposition) des Walzenmantels und damit auch des gesamten Walzenstapels erreicht und während des Betriebes in dieser Betriebsposition gehalten wird. Nachteilig dabei ist, daß die beim Betrieb des Kalanders unvermeidlichen Vibrationen der Maschinenteile durch einen starren mechanischen Anschlag verstärkt auf den Walzenmantel und das gesamte Walzensystem übertragen werden und zu einer Beeinträchtigung der zu behandelnden Warenbahn führen können. Nachteilig ist außerdem, daß nur eine, und zwar die äußerste außenmittige Position des Walzenmantelhubes, die durch einen starren mechanischen Anschlag gebildet ist, zur Vorgabe der Betriebsposition dient. Ferner ist durch die Abstützung des Walzenmantels im Anschlag auch eine eingeschränkte (begrenzte) Regelbarkeit des Streckenlastprofils verbunden.

Aus DE 34 16 210 C2 ist eine Walzenpresse mit einer Endwalze bekannt, bei der der Walzenmantel nahe seinem Ende auf der zugehörigen Walzenachse gelagert ist. Im Bereich der Lager sind Kraftsensoren angeordnet, deren Ausgangssignale einen Regler für die Stützkräfte der auf einen innenumfang des Walzenmantels wirkenden hydrostatischen Stützelemente derart beeinflussen, daß die erfaßten Kräfte minimiert werden, d.h. über die Lager möglichst geringe Kräfte auf den Walzenmantel übertragen werden. Bei der Weiterbildung dieser Anordnung gemäß DE 39 09 911 C1 werden hydraulische Kraftsensoren verwendet. Nachteilig dabei ist, daß eine solche Endwalze ohne inneren Walzenmantelhub relativ zur Walzenachse nicht als selbstbelastende Biegeeinstellwalze, die eine wesentlich präzisere Einstellung und Regelung der Belastungskräfte, d.h. des Streckenlastprofils, ermöglicht, verwendet werden kann. Nachteilig ist weiter der hohe Regelungsaufwand und die Beschränkung auf nur eine vertikale Betriebsposition des Walzenmantels.

Die gleichen Nachteile besitzt die Walzenanordnung gemäß DE 29 43 644 C2, bei der die relative Höhenlage von Walzenachse und Walzenmantel einer Endwalze derart geregelt wird, daß die Walzenachse eine etwa mittlere Lage im Walzenmantel annimmt.

Aus DE 39 18 989 C1 ist bekannt, bei einer Biegeeinstellwalze die vertikale Ausfahrbewegung von hydrostatischen Stützelementen, die sich an der Walzenachse vertikal verlagerbar abstützen und mit mindestens einer offenen hydrostatischen Lagertasche gegen einen Innenumfang des Walzenmantels wirken, mittels Anschlägen zu begrenzen. Wenn ein Anschlag erreicht ist, wird das Stützelement mechanisch festgehalten und kann nicht weiter ausfahren. Dadurch ergibt sich eine bestimmte Positionierung des Walzenmantels zur Walzenachse. Nachteilig hierbei ist, daß die Positionierung durch die eigentliche Kräfteübertragung zur Einstellung der Streckenlast erfolgt und sich folglich mit dieser ändert. Bezugslagenänderungen in Abhängigkeit von Kraftübertragungsänderungen sind die Folge.

Aus DE 42 03 497 A1 ist schließlich eine Ausgleichswalze zur Druckbehandlung von Warenbahnen bekannt, die aus einem stationären Walzenkem besteht, der von einem rotierenden Walzenmantel umgeben ist, der sich über nebeneinander liegende hydraulische Stützelemente an der Walzenachse vertikal verlagerbar abstützt, wobei die Stützelemente auf zwei diametralen Mantellinien der Walzenachse angeordnet sind. Durch die Beaufschlagung der hydraulischen Stützelemente mit Druckmittel bei bestimmten Druckwerten wirken die resultierenden Kräfte zusammen und ermöglichen die Längs- und auch die Schnittverformung des Walzenmantels. Nachteilig hierbei ist, daß eine solche Ausgleichswalze ohne inneren Walzenmantelhub ausgebildet ist, so daß die zuvor genannten Nachteile auch hier auftreten.

Aufgabe der Erfindung ist es daher, eine Durchbiegeeinstellwalze nach dem Oberbegriff des Anspruchs 1 zu schaffen, die eine Positionierung des Walzenmantels zur Walzenachse in einer Betriebsposition ohne wesentlichen zusätzlichen Aufwand ermöglicht.

Eine weitere Aufgabe besteht darin, einen Kalander und ein Verfahren zum Kalandrieren mit einer solchen Walze auszubilden.

Die Aufgabe wird durch die Merkmale des kennzeichnenden Teils des Anspruchs 1 gelöst. Die weitere Aufgabe wird durch die Merkmale der Ansprüche 14 bzw. 15 gelöst.

Hierdurch wird eine Durchbiegeeinstellwalze mit innerem Walzenmantelhub geschaffen, die eine Positionierung des Walzenmantels auf hydraulischem Wege erlaubt. Der hydraulische Stopper arbeitet aufgrund des begrenzten Elementhubes, der diesen mit einem wählbaren Hub an der Walzenachse fesselt, wie ein Überstromventil und stoppt und hält damit den Walzenmantel in einer wählbaren Betriebsposition. Im Bereich des inneren Hubes ist die Durchbiegeeinstellwalze demnach in eine vorgebbare Position verlagerbar und dort fixierbar.

Wird die hydrostatische Lagertasche eines in den maximalen Hub gepressten Stoppers mit einem konstanten Öl- bzw. Druckmittelstrom versorgt, kann sich dann bei Annäherung des innenumfangs des Walzenmantels an diese Lagertasche ein Druck in dieser Lagertasche aufbauen. Dieser Druckaufbau kann bis zu einem vorgebbaren Sollwert erfolgen, bei dem die Lagertasche mit einem Dichtspalt einer bestimmten Spalthöhe, die aus der dem Sollwert der des Drucks entsprechenden Spaltströmung folgt, an dem Innenumfang des Walzenmantels anliegt Wird diese bestimmte Spalthöhe durch äußere Störkräfte verkleinert, steigt der Druck in der Lagertasche und erzeugt eine gegengerichtete Kraft. Wird diese bestimmte Spalthöhe durch äußere Störkräfte vergrößert, fällt der Druck in der Lagertasche, wodurch ebenfalls eine gegengerichtete Kraft erzeugt wird.

Ein solcher hydraulisch hydrostatischer Stopper ist nicht in die eigentliche Kräfteübertragung eingebunden. Ein Soll-Öldruck kann damit so eingestellt werden, daß eine gezielte Steifigkeit der Fixierung erreicht wird, d.h. einerseits das System nicht zu steif, andererseits auch nicht zu weich wird. So kann eine Schwingungsdämpfung optimiert werden.

Des weiteren kann der hydraulisch hydrostatische Stopper als Kolben-Zylinder-Einheit mit einem anderen Kolbendurchmesser versehen sein als die eigentlichen Lastübertragungselemente, d.h. die Stützelemente, um weiteren Einfluß auf die Stützkräfte dieser Elemente nehmen zu können. Gleiches gilt für verwendete Dichtkantenbreiten der hydraulisch hydrostatischen Stopper.

Druckanstiege und Druckabfälle in der Lagertasche eines Stoppers sind zudem Signale für unerwünschte vertikale Walzenmantelverlagerungen. Die Druckwertveränderungen in den Lagertaschen können deshalb gemessen und als Steuersignale zur Regelung der Stützkräfte der Stützelemente eingesetzt werden. Steigt beispielsweise der Druck in der Lagertasche eines Stoppers aufgrund direkter oder indirekter vertikaler Walzenmantelverlagerungen über den Sollwert des Drucks hinaus, kann dieser Druckanstieg bei Erreichen eines vorgebbaren Maximalwerts des Druckes ein Steuersignal auslösen, das einem Regler für die Stützelemente zugeführt werden kann, der die Stützkräfte derart ändert, daß der Sollwert des Drucks wieder hergestellt wird. Fällt der Druck in der Lagertasche unter den Sollwert, kann bei Erreichen eines vorgebbaren Minimalwertes des Druckes ebenfalls ein Steuersignal dem Regler für die Stützelemente zugeführt werden, der die Stützkräfte derart ändern kann, daß der Sollwert des Drucks wieder hergestellt wird. Der Walzenmantel wird also an die vorgegebene Betriebsposition hydraulisch geklammert und gehalten.

Über einen Solldruck in einer Lagertasche des Stoppers kann zusätzlich der Wirkungsbereich der Fesselung festgelegt werden. Das ist zum einen die Differenz vom Solldruck zu einem Maximaldruck in der Lagertasche, der über ein Druckbegrenzungsventil in einer Druckflüssigkeitszuführung fest voreingestellt werden kann, und zum anderen die Differenz vom Solldruck zum Minimaldruck in der Lagertasche, die durch den gewählten Solldruck bestimmt werden kann. Es erfolgt eine Kräftekontrolle. Auf diese Weise kann die Walze und der Walzenmantel vor Zerstörung geschützt werden. Der Solldruck eines Stoppers ist beliebig wählbar, da er als festeinstellbarer Wert in den Profilberechnungen berücksichtigt werden kann, aber seine Größe nicht das Ergebnis der Öldruckoptimierung in den Stützelementen ist.

Vorteilhaft ist ferner, wenn mindestens zwei Stopper derart angeordnet sind, daß sie etwa in den Viertelpunkten der Walze liegen, weil sie dort bei Abweichungen von einem Solldruck, im Sinne von zwischenabgestützten Walzen, die kleinsten Profilfehler erzeugen.

Weiterhin ist es vorteilhaft, die Stopper zur Positionierung des Walzenmantels als eigenständige rückwärtsgerichtete Elemente zusätzlich in die Walze einzubauen, und zwar mit unabhängigen Druckflüssigkeitsversorgungen.

Es ist ferner zweckmäßig, die erfindungsgemäße Durchbigeeinstellwalze derart in einen Kalander einzubauen, daß die Stopper auf der rückwärtsgerichteten Walzenseite angeordnet sind. Bei Druckänderungen, die zwar im störungsfreien Normalbetrieb klein sind, können so örtliche Linienkraftabweichungen minimiert werden.

Weitere Ausgestaltungen und Vorteile der Erfindung sind der nachfolgenden Beschreibung und den Unteransprüchen zu entnehmen.

Die Erfindung wird nachfolgend anhand der in den beigefügten Abbildungen dargestellten Ausführungsbeispiele näher erläutert.
Fig. 1 zeigt im Längsschnitt eine Durchbiegeeinstellwalze mit Stoppern gemäß einem ersten Ausführungsbeispiel,
Fig. 2 ist ein Axialschnitt durch einen Stopper gemäß Fig. 1 und zeigt auch die Hydraulikmediumversorgung,
Fig. 3 ist ein Schnitt nach Linie 3-3 in Fig. 2,
Fig. 4 ist ein Druck-Spaltweite-Diagramm,
Fig. 5 zeigt in schematischer Seitenansicht eine erfindungsgemäße Kalanderanordnung mit Durchbiegeeinstellwalzen gemäß Fig. 1,
Fig. 6 zeigt einen modifizierten Stopper,
Fig. 7 zeigt im Längsschnitt eine Durchbiegeeinstellwalze mit Stoppern gemäß einem zweiten Ausführungsbeispiel,
Fig. 8 ist ein Axialschnitt durch ein Paar Stopper gemäß Fig. 7,
Fig. 9 zeigt im Längsschnitt eine Durchbiegeeinstellwalze mit Stoppern gemäß einem dritten Ausführungsbeispiel,
Fig. 10 ist ein Axialschnitt durch ein Paar aus Stopper und Stützelement gemäß Fig. 9,
Fig. 11 zeigt im Längsschnitt eine Durchbiegeeinstellwalze mit Stoppern gemäß einem vierten Ausführungsbeispiel,
Fig. 12 ist ein Axialschnitt durch ein Paar Stopper gemäß Fig. 11,
Fig. 13 zeigt einen anders modifizierten Stopper,
Fig. 14a und 14b zeigen schematisch Querschnitte einer unteren Endwalze und einer darüber angeordneten Zwischenwalze einer erfindungsgemäßen Kalanderanordnung zur Verdeutlichung des Konstrukions- und Wirkprinzips eines Kalanders.

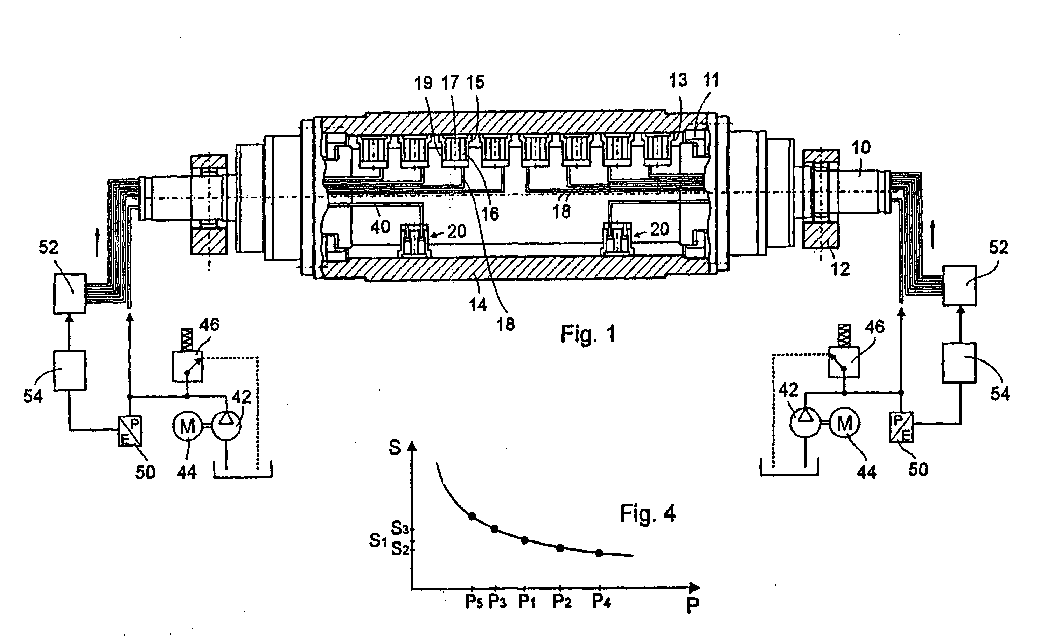

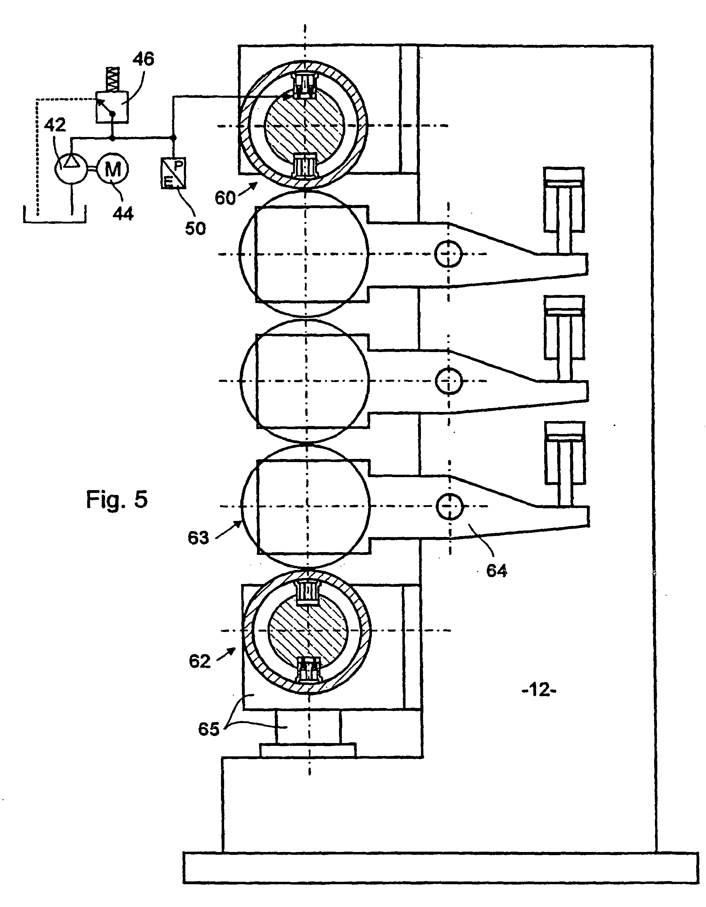

Fig. 1 zeigt ein erstes Ausführungsbeispiel einer beispielsweise als untere Endwalze 62 einer Kalanderanordnung einsetzbaren, selbstbelastenden Durchbiegeeinstellwalze mit einer Walzenachse 10, deren hervorstehenden Enden in einem nur angedeuteten Kalanderständer 12 drehfest abstützbar sind (vgl. Fig. 5). Um die Walzenachse 10 ist ein Walzenmantel 14 drehbar gelagert, der über mindestens einen Führungseinsatz, beispielsweise Kulissen 11, relativ zu der Walzenachse 10 vertikal verschiebbar ist und sich durch radial verlagerbare hydrostatische Stützelemente 16 auf der Walzenachse 10 abstützt. Die Walzenachse 10 beläßt einen allseitigen Abstand zu einem Innenumfang 13 des Walzenmantels 14, so daß sich der Walzenmantel 14 vertikal zur Walzenachse 10 verlagern kann. Die Durchbiegeeinstellwalze besitzt dadurch einen sogenannten inneren Hub. Die Stützelemente 16 sind vertikal aufwärts gerichtet und tragen den Walzenmantel 14.

Die Stützelemente 16 sind hier als hydrostatische Dichtelemente ausgebildet, wie beispielsweise in DE 3820974 C3 oder DE 39 18 989 C1 beschrieben. Danach wirken gegen den Innenumfang 13 des Walzenmantels 14 Stützelemente 16 in Form von Dichtungsgliedern 15, die hydrostatische Lagertaschen 17 begrenzen, denen hydraulische Druckflüssigkeit über erste Leitungen 18 zuführbar ist. Die Dichtungsglieder 15 sind in Sackbohrungen 19 der Walzenachse 10 vertikal verschiebbar geführt, wobei die Ausfahrbarkeit über eine nicht weiter dargestellte hydraulische Kolben-Zylinder-Einheit mit zugehöriger Druckmittelversorgung erfolgt. Alternative Ausbildungen der Stützelemente 16, wie beispielsweise in DE 31 19 387 C2 beschrieben, sind genauso einsetzbar.

Eine Mehrzahl dieser Stützelemente 16, hier beispielsweise 8, ist entlang einer Reihe angeordnet, die sich über eine Länge der Walzenachse 10 erstreckt.

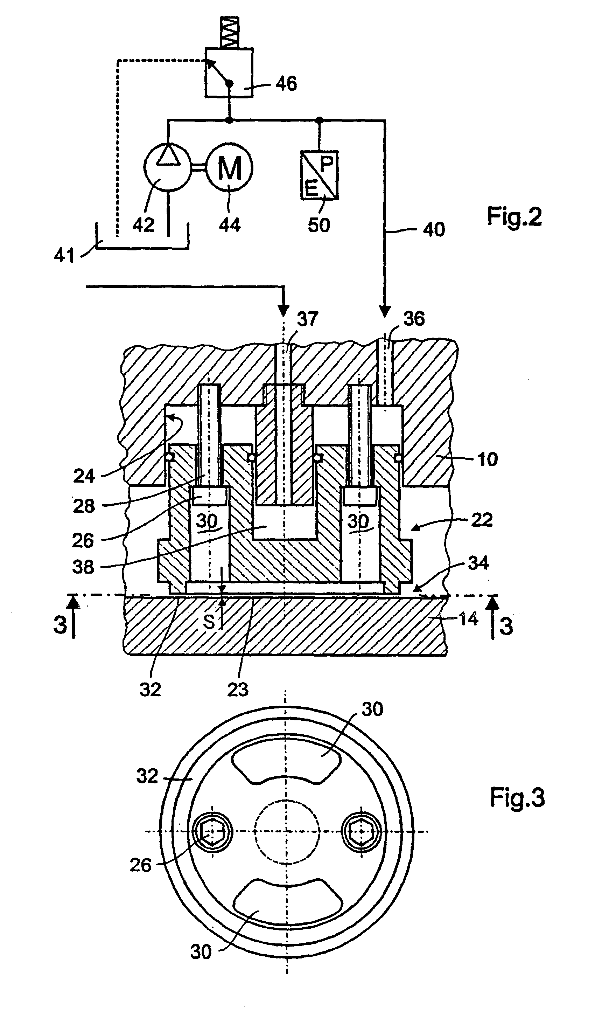

In der Umfangsrichtung um 180° versetzt, d.h. auf einer diametral oder gegenüberliegenden Linie in Bezug auf die Reihenanordnung der Stützelemente 16, ist mindestens ein Stopper bzw. Stoppelemente 20 an der Walzenachse 10 vorgesehen. Vorzugsweise sind gemäß dem in Fig. 1 dargestellten Ausführungsbeispiel zwei zueinander beabstandete Stopper 20 vorgesehen. Die Stopper 20 sind vorzugsweise hydraulisch hydrostatische Stopper 20 in Form von hydrostatischen Stützelementen mit einem Fesselungsanschlag, wie im einzelnen in den Fig. 2 und 3 dargestellt. Gemäß Fig. 1 wirken die Stopper 20 beispielsweise abwärts gerichtet, während die Stützelemente 16 dann aufwärts gerichtet wirken.

Gemäß Fig. 2 und 3 umfaßt jeder Stopper 20 ein Dichtungsglied bzw. Stempel 22 mit einem kolbenartigen zylindrischen Körper, der in einer Bohrung 24 der Walzenachse 10 gleitbeweglich geführt ist. Eine in Fig. 2 dargestellte Betriebspostion, bei der das Dichtungsglied 22 sich in einer wählbaren Ausfahrstellung befindet, ist durch Anschläge festgelegt. Die Anschläge werden gebildet von Kopfbolzen 28, die zugleich eine Verdrehsicherung für das Dichtungsglied 22 bilden und in die Walzenachse 10 eingeschraubt sind. Köpfe 26 der Kopfbolzen 28 bestimmen eine eindeutige maximale Ausfahrstellung des Dichtungsgliedes 22 und damit eine eindeutige Lage gegenüber der Walzenachse 10. Die Köpfe 26 bilden den Fesselungsanschlag. Der Stopper 20 hat somit einen begrenzten Elementhub, der wählbar vorgegeben werden kann und eine Hubbegrenzung darstellt. Das Dichtungsglied 22 wird in seiner Betriebsposition gehalten, indem eine Leitung 37 Drucköl in eine Sackbohrung 38 einspeist.

Zwei Kanäle bzw. Durchlässe 30 durchsetzen das Dichtungsglied 22 und werden mit Hydraulikmedium gespeist. Das Dichtungsglied 22 liegt mit einer dem Innenumfang 13 des Walzenmantels 14 angepaßten Stirn- bzw. Anlagefläche 32 an. In der Stirnfläche 32 ist mindestens eine, vorzugsweise mehrere flache Lagertaschen 23 ausgebildet, die einen wesentlichen Teil der Stirnfläche 32 einnehmen, so daß von ihr nur berandende Stege übrigbleiben. Die Stirnfläche 32 begrenzt zusammen mit dem Walzenmantel 14 einen Spalt 34, durch den das über die Kanäle 30 zugeführte Hydraulikmedium austreten kann.

Den Kanälen 30 wird über einen in der Walzenachse 10 ausgebildeten Einlaß 36 Hydraulikmedium zugeführt. Eine Zuleitung 40 erstreckt sich durch die Walzenachse 10 zu einer Pumpe 42, angetrieben von einem Motor 44, zu einem Vorratsbehälter 41.

Die hydrostatischen Lagertaschen 23 eines Stoppers 20 werden mit einem konstanten Öl- bzw. Druckmittelvolumenstrom versorgt und zunächst praktisch drucklos durchströmt. Bei einer Annäherung des Innenumfangs 13 des Walzenmantels 14 an die Lagerflächen 32 des Stoppers 20, wodurch der Dichtspalt 34 des Stoppers 20 entsteht, baut sich dem konstanten Volumenstrom entsprechend in den hydrostatischen Taschen 23 der Druck auf bis zu einem vorgebbaren Sollwert, und es stellt sich unter der entsprechenden Spaltströmung eine Spalthöhe S ein (die im µ-Bereich beispielsweise bei etwa 50 µ liegt). Der benötigte Anpreßdruck für den hydraulisch hydrostatischen Stopper 20 wird durch die separate Durckölleitung 37 aufgebaut.

Wird aus einem Ungleichgewicht heraus, hervorgerufen durch äußere Störkräfte, die auf den Walzenmantel 14 einwirken, der Stopper 20 unter einer geringfügigen Hubbewegung im Bereich des Dichtspaltes 34, also im µ-Bereich, nach oben gedrückt, steigt der Druck im Stopper 20 an und erzeugt eine gegengerichtete Kraft, die sich so lange steigert, bis das neue Gleichgewicht vorhanden ist. Der Stopper 20 ist folglich ein auf vertikale Walzenmantelverlagerungen durch Druckwertänderungen in der Lagertasche 23 ansprechender, jeweils eine gegengerichtete Kraft erzeugender Positionsgeber.

Gelingt es nicht, durch die gegengerichtete Kraft das Kräftegleichgewicht in dem Stütz- und Belastungssystem herzustellen und steigt der Druck im Stopper 20 weiter bis zu einem vorgebbaren Maximalwert des Druckes an, löst dieser Druckanstieg (mit Hilfe des Wandlers 50) ein Steuersignal aus, das einem Regler 52 für die Stützelemente 16 zugeführt wird, der die Stützkräfte derart ändert, daß ein Gleichgewichtszustand im Bereich des Drucksollwertes wieder hergestellt wird.

Wird andererseits aus einem Ungleichgewicht heraus der Walzenmantel 14 im Bereich des Dichtspaltes 34 vom Stopper 20 wegbewegt, so fällt der Druck im Stopper 20 ab, bis das neue Gleichgewicht erreicht ist. Wird beim Absenken des Druckes im Stopper 20 der vorgegebene Minimalwert des Druckes erreicht, wird ebenfalls ein Steuersignal dem Regler 52 für die Stützelemente 16 zugeführt, der über einen Rechner 54 die Stützkräfte derart ändert, daß ein Gleichgewichtszustand im Bereich des Drucksollwertes wieder hergestellt wird.

Sind die äußeren Störkräfte, die auf den Walzenmantel 14 wirken so groß, daß ihre Ausregelung nicht möglich ist, so liegt eine Systemstörung vor. Bei der Aufwärtsbewegung des Walzenmantels 14 bzw. bei dem Druckanstieg im Stopper 20 bis zu einer vorgebbaren oberen Grenze wird durch ein Steuersignal das Öffnen eines Walzenstapels bei einer Kalanderanordnung hervorgerufen und der Störzustand angezeigt. Entsprechend wird bei der Abwärtsbewegung des Walzenmantels 14 bei einem Druckabfall im Stopper 20 bis zu einer vorgebbaren unteren Grenze der Walzenstapel ebenfalls geöffnet (gelüftet) und der Störzustand der Kalanderanordnung angezeigt.

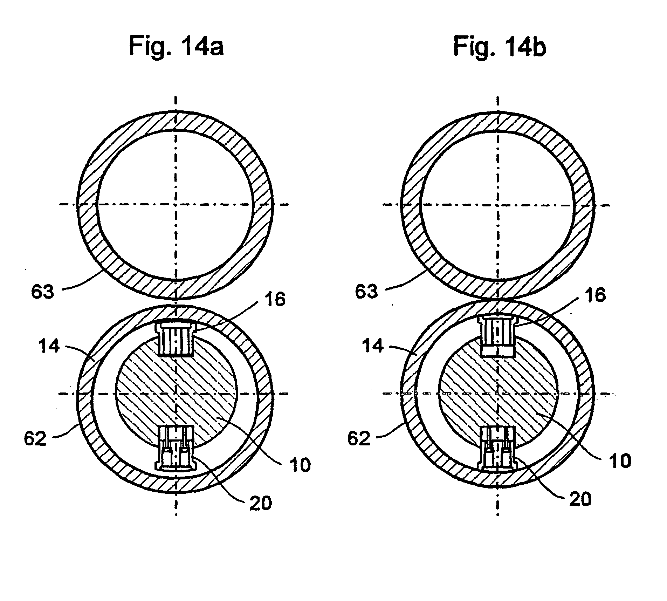

Für das Schließen eines Walzenstapels einer Kalanderanordnung gemäß Fig. 14a und 14b, bei der die vorstehend beschriebene Durchbiegeeinstellwalze als untere Endwalze 62 angeordnet ist, ergibt sich das folgende. Der Volumenstrom des Hydrauliköls wird in die beiden gefesselten, rückwärtsgerichteten Stopper 20 geschickt. Der Druck wird dabei praktisch Null sein, da der Walzenmantel 14 nach unten in den Lagern aufliegt und die gefesselten Stopper 20 keinen Kontakt zum Walzenmantel 14 besitzen. Im nächsten Schritt wird ein Stützkolbendruck an den hydrostatischen Stützelementen 16 aktiviert und damit der Walzenmantel 14 angehoben. Bei Kontakt der gefesselten Stopper 20 mit dem Walzenmantel 14 bauen sich rückwärts gerichtete Kräfte auf, die das weitere Anheben des Walzenmantels 14 verhindern. Der Walzenmantel 14 befindet sich in der vorgegebenen Betriebsstellung. An diese Betriebsposition wird der Walzenmantel 14 nach Schließen des Walzenstapels wie oben ausgeführt hydraulisch geklammert, wobei entsprechend der vorgebbaren Linienkräfte in den Nips die Stützkräfte der Stützelemente 16 eingestellt werden können.

Gemäß Fig. 1 bis 4 liefert die Pumpe 42 demnach einen konstanten Durchsatz, d.h. konstante Volumina pro Zeiteinheit; wobei es sich beispielsweise um eine Zahnradpumpe handeln kann oder eine andere Verdrängerpumpe. Neben diesen volumetrischen Druckquellen können auch volumetrische Volumenstromteiler zum Einsatz gelangen.

Die Pumpe 42 fördert gegen den in der Leitung 40 herrschenden Druck und ist so ausgelegt, daß sie dies bis zu einem durch ein Überdruckventil 46 festgelegten Druck tun kann. Der Druck in der Leitung 40 wird mittels eines Senors 50, hier ein Druckaufnehmer, erfaßt und dem Regler 52 für die Drücke zur Bestimmung der Stützkräfte der hydrostatischen Stützelemente 16 aufgeschaltet.

Es sei angenommen, daß der Walzenmantel 14 vollständig abgesenkt ist. Dies ist beispielhaft in Fig. 14a dargestellt, wo die vorstehend beschriebene Biegeeinstellwalze eine untere Endwalze 62 eines Kalanders bildet, über der eine Zwischenwalze 63 angeordnet ist. Der zwischen den beiden Walzen 62, 63 liegende Nip ist geöffnet.

Der Gegendruck P in der Leitung 40 ist bei dieser Position des Walzenmantels 14 nahe bei Null, weil eine Spaltweite S des Dichtspaltes 34 sehr groß ist, und das Hydraulikmedium wird von der Pumpe 42 im Kreis gefördert.

Werden nun die Stützelemente 16 mit Druckmedium beaufschlagt, heben sie den Walzenmantel 14, um Kräfte auf eine einen Nip passierende Materialbahn auszuüben, wie in Fig. 14b dargestellt. Der Walzenmantel 14 nähert sich somit dem Dichtungsglied 22 des Stoppers 20. Die Spaltweite S verringert sich, der Druck über dem Spalt nimmt zu, und es wird auf den Walzenmantel 14 eine abwärts gerichtete Kraft ausgeübt. Bei Kräftegleichgewicht befindet sich der Walzenmantel 14 in einer Position entsprechend einer Spalthöhe S1, bei der in Leitung 40 der Druck P1 herrscht. Dies ist dann der Fall, wenn eine Soll-Position und die Ist-Position übereinstimmen.

Weicht die Position des Walzenmantels 14 von seiner Sollposition ab, beispielsweise in Richtung engeren Spalts und höheren Drucks, würde normalerweise der Regler für die Einstellung der Stützkräfte der hydrostatischen Stützelemente 16 eingreifen, um die Sollposition wieder herszustellen. Im Rahmen der Erfindung wird jedoch zugelassen, daß die Ist-Position zwischen einer oberen Grenze P2/S2 und einer unteren Grenze P3/S3 (vgl. Fig. 4) von der Soll-Position abweichen darf, ohne daß der Regler eingreift. Das hat zur Folge, daß die Stopper 20 einen "Pseudo-Anschlag" definieren, der so gestaltet ist, daß er etwaige Stöße dämpfend abfängt Erst wenn der Druck den Wert P2 übersteigt oder unter den Wert P3 abfällt, greift der Regler ein und versucht, den Walzenmantel 14 wieder in seine Soll-Position zu bringen. Wird gleichwohl der Maximaldruck P4 (vorgegeben durch den Druckbegrenzer 46) erreicht, schaltet sich die Kalanderanordnung ab, da der vorgegebene Stellbereich des Reglers überschritten würde. Entsprechendes gilt für ein Unterschreiten eines Druckes P5.

Dabei soll der Begriff "Pseudo-Anschlag" zum Ausdruck bringen, daß die Relativlage des Walzenmantels zur Achse nicht von aneinanderliegenden mechanischen Bauteilen festgelegt ist, sondern daß noch der Hydraulikmediumfilm im Durchtrittsspalt zwischen dem Stoppelement und dem Walzenmantel zwischengeschaltet ist. Die Höhe des Durchtrittsspalts hängt von dem Druck des eingespeisten Hydraulikmediums ab, der ein Maß für die Positionierkräfte bildet.

In einer Variante kann man innerhalb des Druckbereiches P2 bis P3 die Unterschreitungen des Drucks P1 einerseits, die Überschreitungen des Drucks P1 andererseits aufintegrieren und den Quotienten beider Integrale ermitteln. Dieses Quotientensignal zeigt dann dem Regler die Tendenz, mit der die Position des Walzenmantels 14 sich verändert. In einer weiteren Variante kann der Regler auch Überschreitungen von P2 und Unterschreitungen von P3 zulassen, solange sie nicht eine vorgegebene Zeitperiode übersteigen. Es ist nämlich zu berücksichtigen, daß der Regler eine Vielzahl von miteinander vermaschten Regelkreisen beherrschen muß, so daß er Zeit für die Ermittlung von etwaigen Stellsignalen benötigt. Selbst wenn man, wie bei Kalandern üblich, einen schnellen Rechner einsetzt, benötigt dieser doch einige Zehntel Sekunden Rechenzeit, während im Spalt 34 kurzfristige, gegebenenfalls periodische Störungen auftreten können, die beispielsweise auf unvermeidlichen Unwuchten der Walzenmäntel und/oder der Zwischenwalzen einer Kalanderanordnung beruhen.

Die Geometrie der Stopper 20, insbesondere der Wirkdurchmesser und die Spaltlänge, sind in weiten Grenzen variabel, so daß man es auch in der Hand hat, den Pseudo-Anschlag eher starr oder eher weich einzustellen. Im Prinzip würde, wie bereits ausgeführt, ein einziger Stopper 20 genügen; zwei sind jedoch bevorzugt, weil damit eine etwaige Tendenz zum Schräggstellen des Walzenmantels erkannt und vermieden werden kann.

Wie oben erläutert, ist im Betrieb der Stempel 22 stets in Anlage an den Bolzenköpfen 26, so daß man ihn eigentlich stationär an der Walzenachse 10 befestigen könnte. Seine Verlagerbarkeit in die Achse hinein ist eine Sicherheitsmaßnahme, um unter allen Umständen reibende Berührung zwischen dem Walzenmantel 14 und dem Stopper 20 zu vermeiden.

Des weiteren ist es auch möglich, quasivolumetrische oder nicht volumetrische Druckquellen zu verwenden. Wichtig ist dann jedoch, daß beim erforderlichen Maximaldurck, der im Stopper 20 herrschen kann, noch eine Mindestdurchflußmenge vorhanden ist, die die hydrostatische Funktion auch für diesen Betriebszustand gewährleistet. Hydrostatische Funktion bedeutet, daß es nicht zu einer Mischreibung zwischen der Kopffläche 32 des Dichtelementes 22 und der Innenwand 13 des Walzenmantels 14 kommt und Verschleißschäden an diesen Stellen sicher vermieden werden.

Fig. 5 zeigt in schematischer, teilgeschnittener Seitenansicht eine Kalanderanordnung nach der Erfindung, bei der die obere Endwalze 60 mit der Positioniereinrichtung ausgestattet ist. Gleichwohl hat auch die untere Endwalze 62 die dafür benötigten Einbauten; es braucht also nur eine Walzenkonstruktion vorgesehen zu werden, die sowohl oben als auch unten einsetzbar ist, was logistische Vorteile bietet. Zwischen der oberen Endwalze 60 und der unteren Endwalze 62 sind Zwischenwalzen 63 angeordnet. Die Zwischenwalzen 63 sind mittels Hebelmechanismen 64 vertikal beweglich angeordnet. Die Lager der unteren Endwalze 62 sind ferner mittels einer Hubeinrichtung 65 vertikal verstellbar. Die Stopper 20 sind bei der oberen Endwalze 60 auf der rückwärts gerichteten Walzenseite angeordnet. Gleiches gilt für die untere Endwalze 62.

Es ist bevorzugt, den Walzenmantel der unteren Endwalze zu positionieren. Dann senken sich in der oberen Endwalze die Stopper in die Achse und haben keinen Kontakt mit der Innenwandung des Walzenmantels.

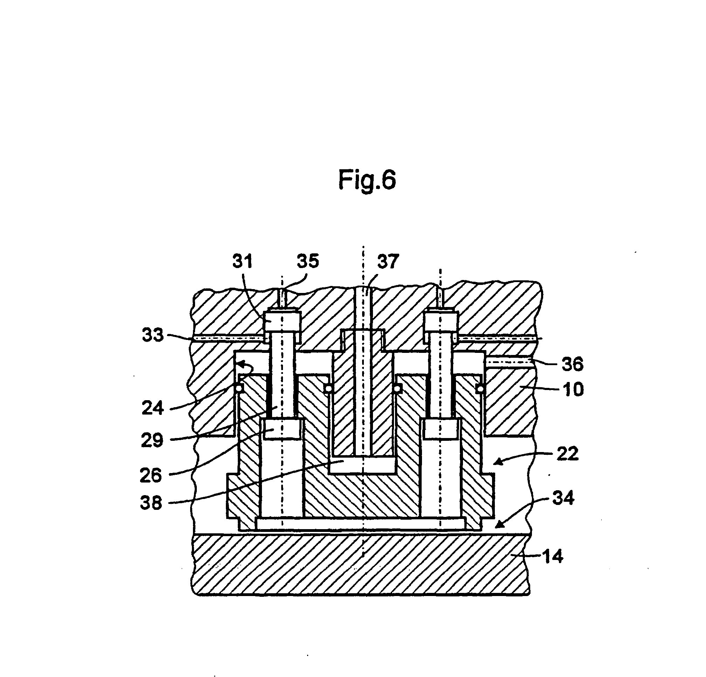

Fig. 6 zeigt ein gegenüber Fig. 2 abgewandeltes Stoppelement; soweit die Bauteile funktionsgleich sind, werden gleiche Bezugszeichen in Fig. 2 verwendet. Die Schraubbolzen 28 aus Fig. 2 sind hier durch Stößel 29 ersetzt, deren achsseitiges Ende einen Kolben 31 trägt. Über Leitung 33 oder Leitung 35 mit Hydraulikmedium angespeist, können die Stößel eine obere Endlage (wie dargestellt) oder eine untere Endlage annehmen, so daß zwei unterschiedliche Sollpositionen des Walzenmantels wählbar sind, ohne daß die Walze zerlegt werden müßte. Es versteht sich, daß die Drücke in den Leitungen 33, 35 und 37 aufeinander abzustimmen sind, damit der Stempel 22 immer in der gewünschten Endlage gehalten ist.

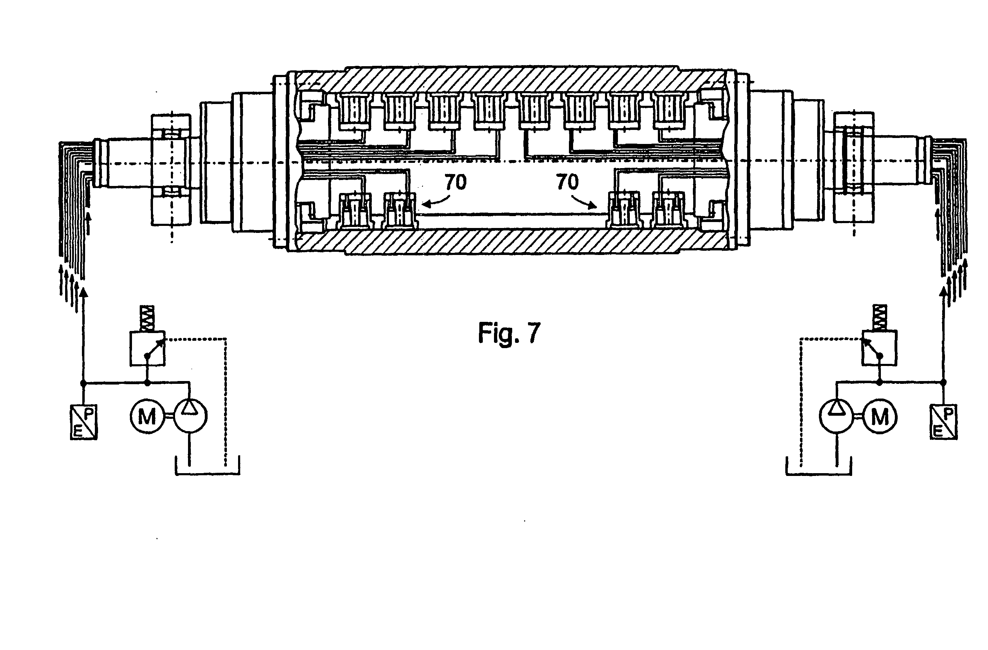

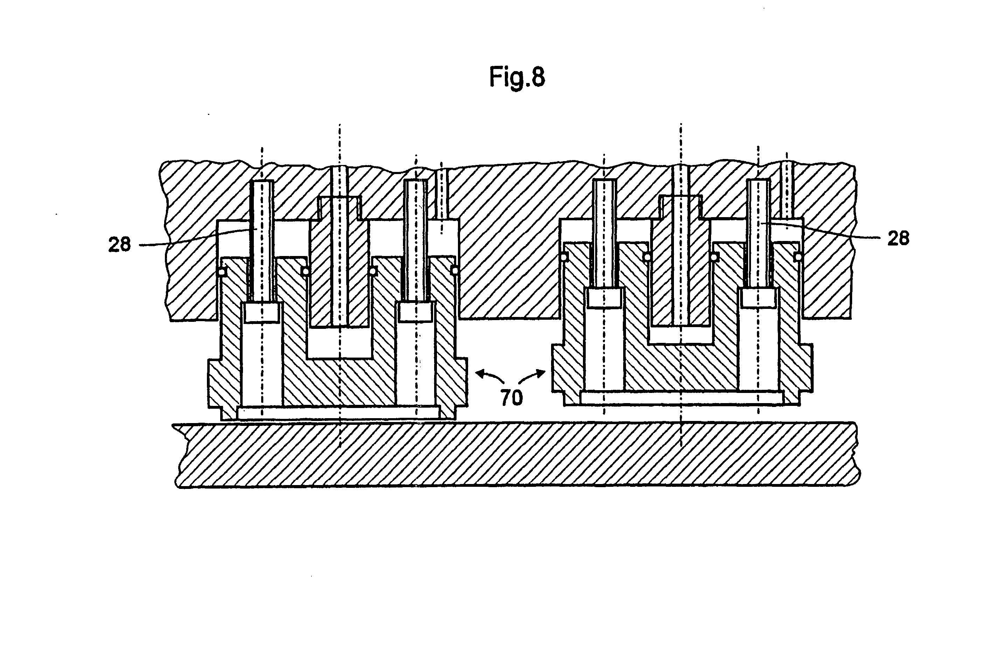

Eine andere Möglichkeit, unterschiedliche Sollpositionen des Walzenmantels vorzugeben, ist in Fig. 7 und 8 gezeigt. Anstelle der beiden Stopper 20 aus Fig. 1 sind zwei Paare von Stoppern 70 vorgesehen, und die jeweils ein Paar bildenden Stopper 70 haben unterschiedlich lange Bolzen 28. Nur ein Stopper jedes Paares wird mit Hydraulikmedium beaufschlagt, während das andere drucklos geschaltet wird. In Fig. 8 ist der links dargestellte Stopper wirksam. Es versteht sich, daß man mit Gruppen von drei oder noch mehr Stoppern weitere Sollpositionen für den Walzenmantel vorgeben kann.

Soweit vorstehend nur auf einen vertikalen Walzenstapel Bezug genommen wurde, betrifft dies nur die übliche Kalanderbauweise. Die Erfindung könnte natürlich auch angewandt werden, wenn die von den Walzenachsen definierte Ebene räumlich anders orientiert wäre.

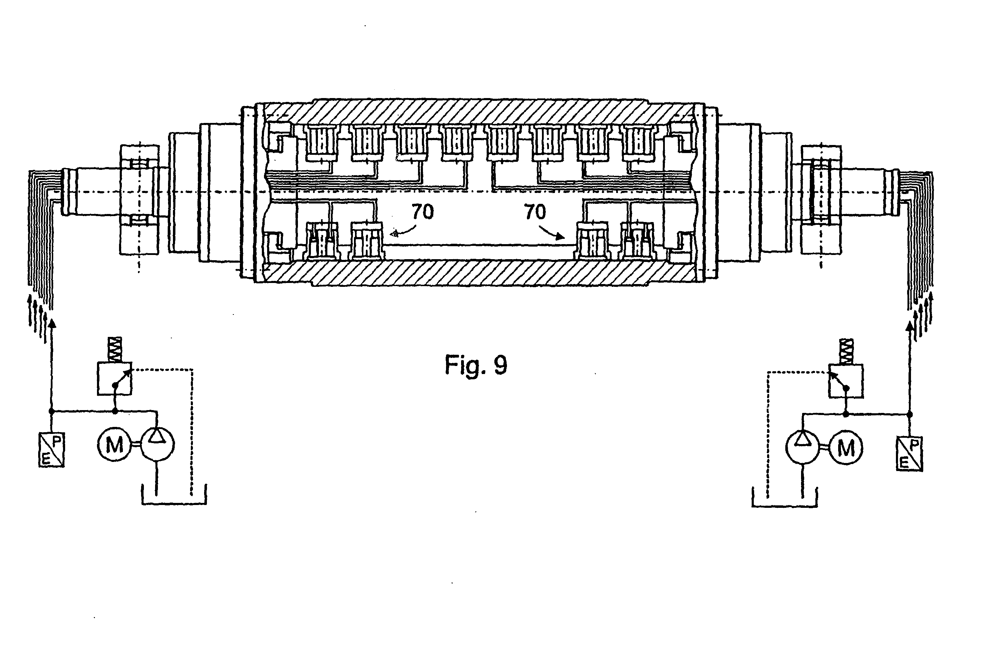

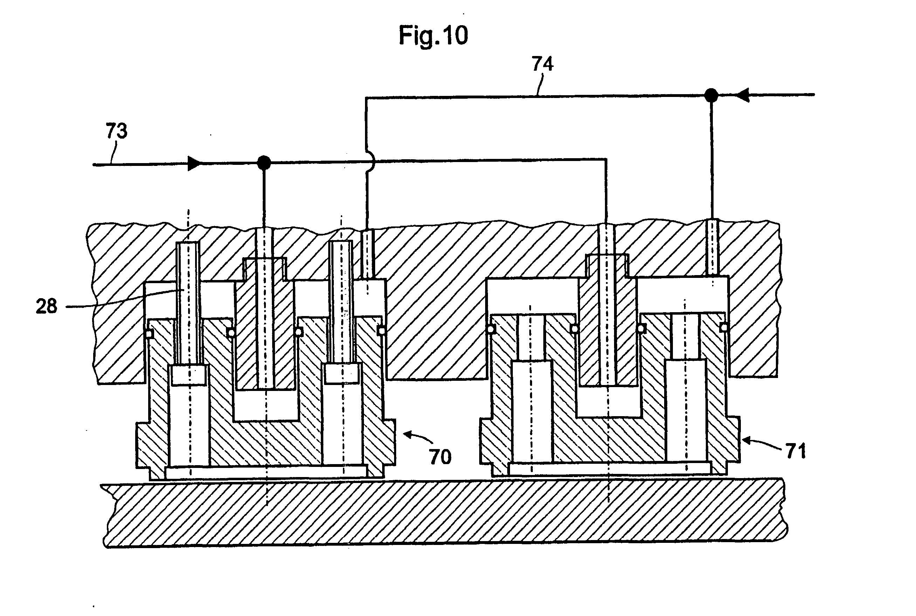

Fig. 9 und 10 zeigen ein drittes Ausführungsbeispiel einer verwendbaren Durchbiegeeinstellwalze, bei der ein Stopper 70 mit einem Haltebolzen 28 ausgerüstet ist und eine Gruppe bildet mit mindestens einem hydrostatischen Stützelement 71 ohne Haltebolzen. Bei dieser Variante liegt das Stützelement 71 ohne Haltebolzen immer mit einem Stützkolbendruck an dem Innenumfang 13 an, d.h. auch dann, wenn sich der Walzenmantel 14 vom Stopper 70 entfernt hat. Die Elemente 70, 71 sind dazu über Leitungen 73, 74 an eine gemeinsame Druckversorgungsleitung mit einer volumetrischen Druckquelle angeschlossen.

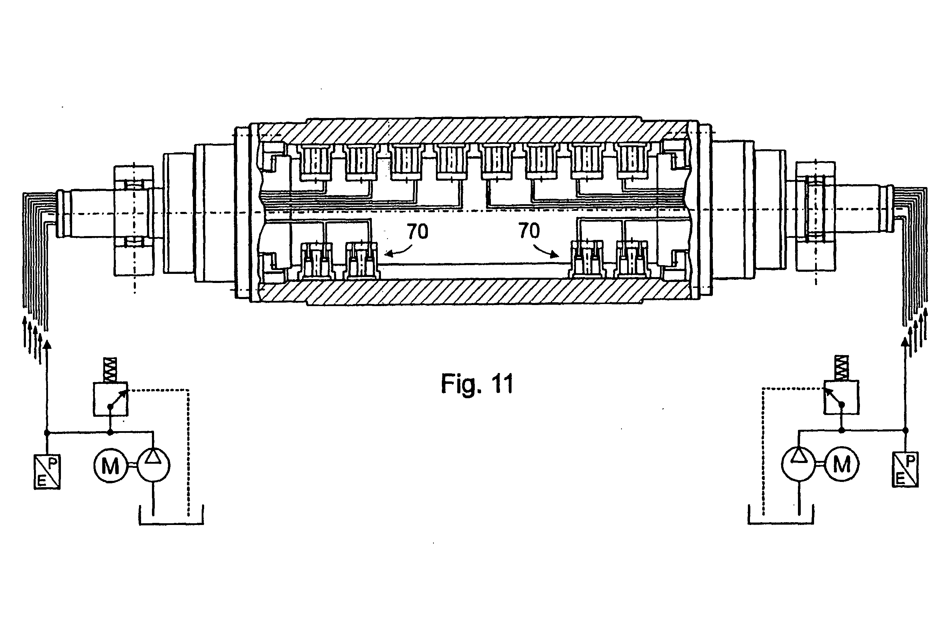

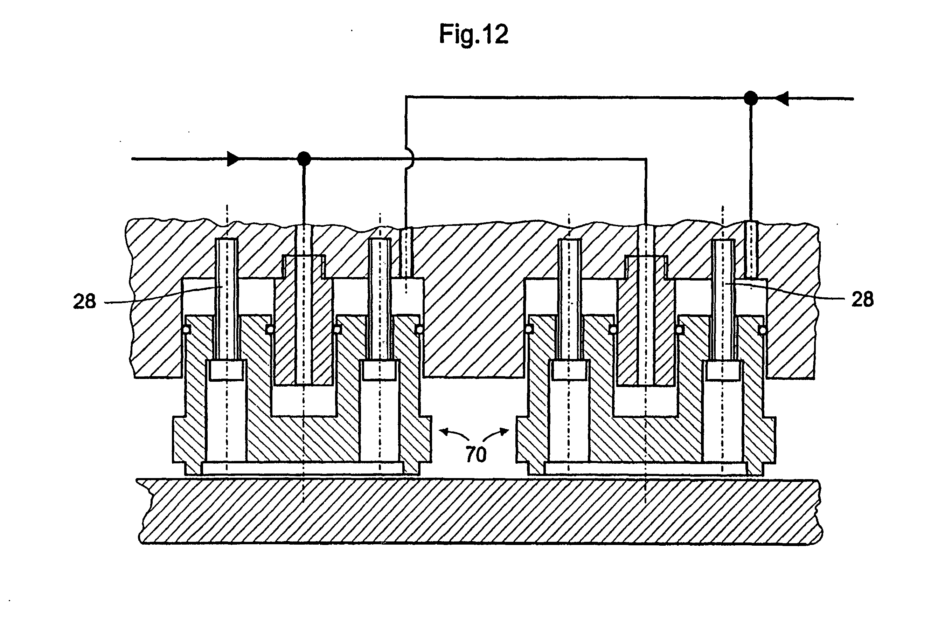

Bei dem vierten Ausführungsbeispiel gemäß Fig. 11 und 12 sind in einer Gruppe von mehreren Stoppern 70 alle mit gleichlangen Haltebolzen 28 ausgrüstet und an eine gemeinsame volumetrische Druckquelle angeschlossen. Diese Ausgestaltung vermeidet den geschilderten Nachteil des dritten Ausführungsbeispiels, da nach einer Wegbewegung des Walzenmantels von dem Stopper 70 alle Elemente durch ihre Haltebolzen 28 in ihrem Hub begrenzt sind und so der Bewegung des Walzenmantels nicht weiter folgen können. Die Funktionsfähigkeit dieser Lösung ist auch gewährleistet, wenn die Länge der Haltebolzen 28 unvermeidliche Toleranzunterschiede aufweist. Die Betriebsposition des Walzenmantels wird dann durch das Element 70 mit dem kürzesten Haltebolzen 28 bestimmt.

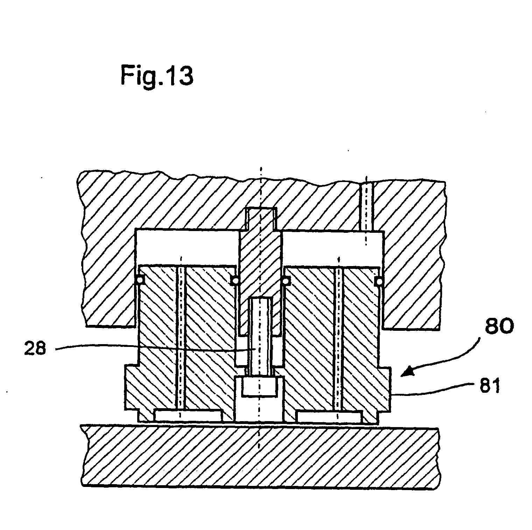

Fig. 13 zeigt schließlich eine Ausbildung eines Stoppers 80 als hydrostatisches Stützelement mit Haltebolzen 28 unter Verwendung eines hydrostatischen Stützstempels 81.

## Patentansprüche

1. Durchbiegeeinstellwalze für einen Kalander zur Behandlung einer Warenbahn mit einer Walzenachse (10) und einem umlaufenden Walzenmantel (14), der sich über hydrostatische, radial verschiebbare Stützelemente (16), die entlang einer Reihe angeordnet sind, an der Walzenachse (10) mit innerem Walzenmantelhub abstützt, **dadurch gekennzeichnet, daß** mindestens ein, vorzugsweise zu den Stützelementen (16) in einer entgegengesetzten Richtung wirkender hydraulischer Stopper (20, 70) vorgesehen ist, der von einem hydrostatischen Stützelement gebildet wird, das einen in einer Bohrung (24) der Walzenachse (10) radial gleitbeweglich geführten und stimseitig mindestens eine hydrostatische Lagertasche aufweisenden Stempel (22) umfaßt, der für einen vorgebbaren inneren Walzenmantelhub in einen Anschlag (26) begrenzten maximalen Elementhub preßbar ist, bei dem die mindestens eine Lagertasche (23) mit einem Hydraulikmedium durchflossenen Dichtspalt (34) an dem Innenumfang des Walzenmantels anliegt und über Durchlässe (30) in dem Stempel (22) von einem in die Bohrung (24) speisbaren, konstanten Druckmittelstrom durchströmt ist.

2. Durchbiegeeinstettwalze nach Anspruchs 1, **dadurch gekennzeichnet, daß** in die Bohrung (24) eine von einer Pumpe (41) gespeiste Zuleitung (40) Druckmittel fördert und zum Erfassen des Drucks in der Zuleitung (40) eine Meßeinrichtung (50) vorgesehen ist.

3. Durchbiegeeinstellwalze nach Anspruch 2, **dadurch gekennzeichnet, daß** die Meßeinrichtung (50) als ein Druckaufnehmer ausgebildet ist, der in der Zuleitung (40) für die Druckflüssigkeit zur Speisung einer Lagertasche (23) angeordnet ist.

4. Durchbiegeeinstellwalze nach Anspruch 3, **dadurch gekennzeichnet, daß** die Meßeinrichtung (50) mit einer Regeleinrichtung (52) für die Stützelemente (16) koppelbar ist.

5. Durchbiegeeinstellwalze nach einem der Ansprüche 1 bis 4, **dadurch gekennzeichnet, daß** in der Zuleitung (40) ein Druckbegrenzungsventil (46) zur Voreinstellung eines Maximaldruckes in der mindestens einen Lagertasche (23) angeordnet ist.

6. Durchbiegeeinstellwalze nach einem der Ansprüche 1 bis 5, **dadurch gekennzeichnet, daß** in der Zuleitung (40) für die Druckflüssigkeit eine Pumpe (42) zur Einstellung eines konstanten Ölvolumenstroms zu der mindestens einen Lagertasche (23) angeordnet ist.

7. Durchbiegeeinstellwalze nach einem der Ansprüche 1 bis 6, **dadurch gekennzeichnet, daß** die Pumpe (42) als eine volumetrisch arbeitende Pumpe ausgebildet ist.

8. Durchbiegeeinstellwalze nach einem der Ansprüche 1 bis 7, **dadurch gekennzeichnet, daß** ein hydraulischer Stopper (20, 70) mehrere an die Zuleitung (40) für Druckflüssigkeit angeschlossene Lagertaschen (23) aufweist.

9. Durchbiegeeinstellwalze nach einem der Ansprüche 1 bis 8, **dadurch gekennzeichnet, daß** der Anschlag von einem Haltebolzen (28) gebildet wird.

10. Durchbiegeeinstellwalze nach einem der Ansprüche 1 bis 9, **dadurch gekennzeichnet, daß** zwei zueinander beabstandet angeordnete Stopper (20, 70) vorgesehen sind.

11. Durchbiegeeinstellwalze nach Anspruch 10, **dadurch gekennzeichnet, daß** die Stopper (20, 70) im wesentlichen in den Viertelpunkten der Walze liegen.

12. Durchbiegeeinstellwalze nach einem der Ansprüche 1 bis 11, **dadurch gekennzeichnet, daß** als Anschlag für den begrenzten Elementhub des Stoppers (20) ein mechanischer Anschlag in Form eines eine vertikale Verschiebbarkeit des Stempels (22) begrenzenden Bolzens (28) vorgesehen ist.

13. Durchbiegeeinstellwalze nach einem der Ansprüche 1 bis 12, **dadurch gekennzeichnet, daß** auf der der Reihe der Stützelemente (16) abgekehrten Seite neben den Stoppern (20, 70) zusätzliche Stützelemente (71) verteilt angeordnet sind.

14. Kalander für die Behandlung einer Warenbahn mit mindestens einem Walzenstapel aus in einem Kalanderständer angeordneten Walzen, deren Walzenenden in Walzenlagern geführt sind, die mittels Halterungen am Kalanderständer befestigbar sind und mit zwischen jeweils zwei Walzen gebildeten Nips, durch die eine Warenbahn führbar ist, **dadurch gekennzeichnet, daß** mindestens eine mit einer drehfesten Walzenachse (10) in dem Kalanderständer (12) angeordnete Endwalze (60; 62) als Durchbiegeeinstellwalze gemäß einem der Ansprüche 1 bis 13 ausgebildet ist, und die Stopper (20, 70) auf einer Nip abgewandten Seite angeordnet sind.

15. Verfahren zum Kalandrieren einer Warenbahn unter Fixieren einer Betriebsposition einer unteren als Durchbiegeeinstellwalze gemäß einem der Ansprüche 1 bis 13 ausgebildeten Endwalze eines Walzenstapels eines Kalanders, umfassend die Schritte
- Einstellen eines konstanten Druckmittelvolumenstromes zu hydraulischen Stoppern der unteren Endwalze mit einem vorgebbaren SOLL-Wert,
- Aktivieren eines Stützelementendruckes zum Anheben eines Walzenmantels der unteren Endwalze bis zum Erreichen einer vorgebbaren Hubbegrenzung der dem Stützelementendruck entgegenwirkenden hydraulischen Stopper und Definieren einer Betriebsposition dadurch,
- Schließen des Kalanders und Einstellen von vorgebbaren Linienkräften in den Nips mittels Rechner gestütztes Regeln von Element-Stützkräften,
- Halten eines SOLL-Wertes des konstanten Druckmittelvolumenstromes zur Erzeugung gegengerichteter Kräfte in den hydraulischen Stoppern bei Walzenmantelverlagerungen der unteren Endwalze.

16. Verfahren zum Kalandrieren nach Anspruch 15, **gekennzeichnet durch** die zusätzlichen Schritte
- Messen von IST-Werten der Druckwerte in den hydraulischen Stoppern während des Kalandrierens,
- Vergleichen der SOLL-Werte und IST-Werte der Druckwerte in wählbaren Zeitabständen sowie Bestimmen von Abweichungs-Werten,
- Bilden einer Regelschleife unter Eingeben der Abweichungs-Werte in das Rechner gestützte Regeln der Element-Stützkräfte.

17. Verfahren zum Kalandrieren nach Anspruch 15 oder 16, **dadurch gekennzeichnet, daß** zum Fixieren einer Betriebsposition einer oberen Endwalze das Aktivieren eines Stützelementendrucks zum Absenken eines Walzenmantels der oberen Endwalze eingesetzt wird.

## Claims

1. Deflection controlled roll, for a calender for treating a product web, comprising a roll axle (10) and a roll sleeve (14) which rotates about it, which roll sleeve (14) is supported, having an internal roll sleeve stroke, on the roll axle (10) by means of hydrostatic radially displaceable support elements (16) which are arranged in series, **characterised in that** there is provided at least one hydraulic stopper (20, 70), preferably acting in a direction opposite to that of the support elements (16), which is formed by a hydrostatic support element comprising a plunger (22) which is guided to slide radially in a bore (24) of the roll axle (10) and has on its end face at least one hydrostatic bearing pocket, which plunger (22), for a predeterminable internal roll sleeve stroke, is arranged to be pressed into a maximum element stroke limited by a stop (26), in which the at least one bearing pocket (23) rests against the internal periphery of the roll sleeve leaving a sealing gap (34) through which hydraulic medium flows, and through which bearing pocket (23) a constant flow of pressure medium, arranged to be fed into the bore (24); flows by way of openings (30) in the plunger (22).

2. Deflection controlled roll according to claim 1, **characterised in that** a supply line (40), which is fed by a pump (41), supplies pressure medium to the bore (24), and a measuring device (50) is provided for detecting the pressure in the supply line (40).

3. Deflection controlled roll according to claim 2, **characterised in that** the measuring device (50) is in the form of a pressure sensor which is arranged in the supply line (40) for the pressure fluid for supplying a bearing pocket (23).

4. Deflection controlled roll according to claim 3, **characterised in that** the measuring device (50) is arranged to be coupled to a control device (52) for the support elements (16).

5. Deflection controlled roll according to any one of claims 1 to 4, **characterised in that** a pressure limiting valve (46) for presetting a maximum pressure in the at least one bearing pocket (23) is arranged in the supply line (40).

6. Deflection controlled roll according to any one of claims 1 to 5, **characterised in that** a pump (42) for setting a constant volumetric flow of oil to the at least one bearing pocket (23) is arranged in the supply line (40) for the pressure fluid.

7. Deflection controlled roll according to any one of claims 1 to 6, **characterised in that** the pump (42) is in the form of a volumetrically operating pump.

8. Deflection controlled roll according to any one of claims 1 to 7, **characterised in that** a hydraulic stopper (20, 70) has a plurality of bearing pockets (23) connected to the supply line (40) for pressure fluid.

9. Deflection controlled roll according to any one of claims 1 to 8, **characterised in that** the stop is formed by a holding bolt (28).

10. Deflection controlled roll according to any one of claims 1 to 9, **characterised in that** two stoppers (20, 70) are provided that are arranged spaced from one another.

11. Deflection controlled roll according to claim 10, **characterised in that** the stoppers (20, 70) lie substantially at the quarter points of the roll.

12. Deflection controlled roll according to any one of claims 1 to 11, **characterised in that** as stop for the limited element stroke of the stopper (20) there is provided a mechanical stop in the form of a bolt (28) that limits vertical displaceability of the plunger (22).

13. Deflection controlled roll according to any one of claims 1 to 12, **characterised in that** on the side that is remote from the series of support elements (16) there are distributed, in addition to the stoppers (20, 70), additional support elements (71).

14. Calender, for treating a product web, comprising at least one stack of rolls comprising rolls arranged in a calender stand, the roll ends of which are guided in roll bearings, which can be fastened to the calender stand by means of mountings and comprising nips formed between each two rolls, through which nips a product web can be passed, **characterised in that** at least one end roll (60; 62), arranged in the calender stand (12) by means of a roll axle (10) secured against rotation, is in the form of a deflection controlled roll according to any one of claims 1 to 13, and the stoppers (20, 70) are arranged on a nip-remote side.

15. Method of calendering a product web by fixing an operating position of a lower end roll, in the form of a deflection controlled roll according to any one of claims 1 to 13, of a stack of rolls of a calender, comprising the following steps:
- setting a constant pressure medium volumetric flow to hydraulic stoppers of the lower end roll using a predeterminable target value;
- activating a support element pressure to raise a roll sleeve of the lower end roll until a predeterminable stroke limit of the hydraulic stoppers acting against the support element pressure has been reached and defining an operating position thereby;
- closing the calender and setting predeterminable line forces in the nips by means of computer-assisted control of element supporting forces;
- maintaining a target value of the constant pressure medium volumetric flow to produce opposite forces in the hydraulic stoppers in the event of roll sleeve displacements of the lower end roll.

16. Method of calendering according to claim 15, **characterised by** the following additional steps:
- measuring actual values of the pressure values in the hydraulic stoppers during calendering;
- comparing the target values and actual values of the pressure values at selectable time intervals and determining departure values;
- providing a control loop by entering the departure values into the computer-assisted control of the element supporting forces.

17. Method of calendering according to claim 15 or 16, **characterised in that** activation of a support element pressure to lower a roll sleeve of an upper end roll is used to fix an operating position of the upper end roll.

## Revendications

1. Rouleau réglable en flexion pour une calandre destinée à traiter une bande de feuille, comprenant un axe de rouleau (10) et une enveloppe de rouleau rotative (14) qui s'appuie sur l'axe du rouleau (10) avec une course intérieure d'enveloppe de rouleau par l'intermédiaire d'éléments d'appui hydrostatiques (16), mobiles dans le sens radial, et qui sont alignés, **caractérisé en ce qu'**il est prévu au moins une butée hydraulique (20, 70), agissant de préférence dans une direction opposée à celle des éléments d'appui (16), ladite butée étant formée par un élément d'appui hydrostatique qui comprend un piston (22) coulissant dans le sens radial dans un alésage (24) de l'axe du rouleau (10) et présentant du côté frontal au moins une poche d'appui hydrostatique (23), ledit piston pouvant être déplacé, pour une course intérieure donnée de l'enveloppe de rouleau, suivant une course maximale limitée par une butée (26), ladite poche d'appui (23) reposant contre le pourtour intérieur de l'enveloppe de rouleau avec un intervalle d'étanchéité (34) traversé par un fluide hydraulique et étant traversée, par l'intermédiaire de passages (30) dans le piston (22), par un courant de fluide sous pression constant, pouvant être alimenté dans l'alésage (24).

2. Rouleau réglable en flexion selon la revendication 1, **caractérisé en ce qu'**une tuyauterie (40) alimentée par une pompe (41) transporte un fluide sous pression dans l'orifice (24) et **en ce qu'**il est prévu un dispositif de mesure (50) pour déterminer la pression dans la tuyauterie (40).

3. Rouleau réglable en flexion selon la revendication 2, **caractérisé en ce que** le dispositif de mesure (50) est constitué par un capteur de pression qui est disposé dans la tuyauterie (40) de fluide sous pression pour alimenter une poche d'appui (23).

4. Rouleau réglable en flexion selon la revendication 3, **caractérisé en ce que** le dispositif de mesure (50) est susceptible d'être accouplé à un dispositif de régulation (52) des éléments d'appui (16).

5. Rouleau réglable en flexion selon l'une des revendications 1 à 4,
**caractérisé en ce qu'**une soupape de limitation de pression (46) est disposée dans la tuyauterie (40) pour prérégler une pression maximale dans la poche d'appui (23).

6. Rouleau réglable en flexion selon l'une des revendications 1 à 5, **caractérisé en ce qu'**une pompe (42) destinée à établir un débit volumique d'huile constant vers la poche d'appui (23) est disposée dans la tuyauterie (40) de fluide sous pression.

7. Rouleau réglable en flexion selon l'une des revendications 1 à 6, **caractérisé en ce que** la pompe (42) est constituée par une pompe volumétrique.

8. Rouleau réglable en flexion selon l'une des revendications 1 à 7, **caractérisé en ce qu'**une butée hydraulique (20, 70) présente plusieurs poches d'appui (23) raccordées à la tuyauterie (40) de fluide sous pression.

9. Rouleau réglable en flexion selon l'une des revendications 1 à 8, **caractérisé en ce que** la butée (26) est formée par une tige de retenue (28).

10. Rouleau réglable en flexion selon l'une des revendications 1 à 9, **caractérisé en ce qu'**il est prévu deux butées hydrauliques (20, 70) disposées à distance l'une de l'autre.

11. Rouleau réglable en flexion selon la revendication 10, **caractérisé en ce que** les butées hydrauliques (20, 70) sont situées sensiblement aux quarts du rouleau.

12. Rouleau réglable en flexion selon l'une des revendications 1 à 11, **caractérisé en ce qu'**il est prévu, comme butée pour la limitation de course de la butée hydraulique (20), une butée mécanique sous la forme d'une tige (28) limitant le déplacement vertical du piston (22).

13. Rouleau réglable en flexion selon l'une des revendications 1 à 12, **caractérisé en ce que** des éléments d'appui supplémentaires (71) sont disposés de manière répartie à côté des butées hydrauliques (20, 70), du côté opposé à la rangée d'éléments d'appui (16).

14. Calandre pour le traitement d'une bande de feuille comportant au moins un empilement de rouleaux constitué de rouleaux disposés sur un support de calandre, les extrémités des rouleaux étant guidées dans des paliers de rouleaux, qui peuvent être fixés sur le support de calandre au moyen de fixations, et des lignes de contact étant formées entre deux rouleaux, par lesquelles on peut guider une bande de feuille, **caractérisé en ce qu'**au moins un rouleau d'extrémité (60, 62) avec son axe de rouleau (10) fixe, disposé dans la calandre (12), est constitué par un rouleau réglable en flexion suivant l'une des revendications 1 à 13, et les butées hydrauliques (20, 70) sont disposées du côté opposé à la ligne de contact entre rouleaux.

15. Procédé pour calandrer une bande de feuille en fixant une position de fonctionnement d'un rouleau d'extrémité d'un empilement de rouleaux d'une calandre, constitué par un rouleau réglable en flexion selon l'une des revendications 1 à 13, comprenant les étapes :
- Réglage d'un débit volumétrique de fluide sous pression constant vers des butées hydrauliques du rouleau d'extrémité inférieur avec une valeur de consigne pouvant être prédéterminée,
- Activation d'une pression d'élément d'appui pour soulever une enveloppe du rouleau d'extrémité inférieur jusqu'à atteindre une limitation de course prédéterminée des butées hydrauliques s'opposant à la pression des éléments d'appui et, par là même, définition d'une position de fonctionnement,
- Fermeture de la calandre et réglage de forces linéaires pouvant être prédéterminées dans les lignes de contact entre rouleaux au moyen d'un réglage assisté par ordinateur des forces des éléments d'appui,
- Maintien d'une valeur de consigne du débit volumétrique du fluide sous pression pour produire des forces orientées en sens contraire dans les butées hydrauliques lors du déplacement de l'enveloppe du rouleau d'extrémité inférieur.

16. Procédé de calandrage selon la revendication 15, **caractérisé par** les étapes supplémentaires de :
- Mesure des valeurs réelles de pression dans les butées hydrauliques pendant le calandrage,
- Comparaison entre les valeurs de consigne et les valeurs réelles de la pression à des intervalles de temps à choisir et détermination des valeurs d'écart,
- Constitution d'une boucle de régulation en entrant les valeurs d'écart dans le réglage assisté par ordinateur des forces d'appui des éléments.

17. Procédé pour calandrer selon la revendication 15 ou 16, **caractérisé en ce que**, pour fixer une position de fonctionnement d'un rouleau d'extrémité supérieur, on utilise l'activation d'une pression d'élément d'appui pour abaisser l'enveloppe du rouleau d'extrémité supérieur.
